# EUROPEAN PATENT APPLICATION

(11) **EP 2 848 446 A2**
(43) Date of publication of application: **18.03.2015**
(21) Application number: 14179117.8
(22) Date of filing: 30.07.2014
(51) Int. Cl.: B60K 6/48, B60W 20/00, B60W 10/06, B60W 10/08, B60W 10/02

(54) **Vehicle drive system**

(30) Priority: 29.08.2013 JP 2013177614
(71) Applicant: AISIN SEIKI KABUSHIKI KAISHA, Kariya-shi, Aichi 448-8650 (JP)
(72) Inventor: Shishido, Yo, Kariya-shi, Aichi 448-8650 (JP); Tojo, Takeshi, Kariya-shi, Aichi 448-8650 (JP)
(74) Representative: Kramer Barske Schmidtchen Patentanwälte PartG mbB

(57) **Abstract**

A vehicle drive system includes a start request determination portion (202) determining whether a start of the engine (101) is requested when a vehicle drives using a motor (102) as the power source without using an engine (101), a start mode determination portion (201) comparing a rotation speed of an input shaft detected by a rotation speed detection portion (140) and a predetermined engine start target rotation speed when the start of the engine (101) is requested and determining whether the rotation speed of the input shaft is assumed to be lower than the engine start target rotation speed, and an engine start control portion (211) disconnecting the motor (102) and the engine (101) from a driving shaft (120, 121a, 121 b) of the vehicle (100) to start the engine (101) by the motor (102) when the start of the engine (101) is requested and when the rotation speed of the input shaft is assumed to be lower than the engine start target rotation speed.

## Description

### TECHNICAL FIELD

This disclosure generally relates to a vehicle drive system.

### BACKGROUND DISCUSSION

According to a known system, an engine is started by a motor which is used for vehicle traveling, or driving by engaging a clutch provided between the motor and the engine without additionally providing a starter motor when changing drive modes from a motor drive mode to a hybrid drive mode at a hybrid vehicle which is configured to travel, or drive by switching the motor drive mode in which the vehicle is driven only by the motor and the hybrid drive mode in which the vehicle is driven by the engine and the motor.

Further, according to a known system, for example, disclosed in JP2012-131497A (hereinafter referred to as Patent reference 1), an engine is started by executing a release phase of a clutch when a requested drive force requested by a driver is increased and assumed to be equal to or greater than a predetermined level at a hybrid vehicle which includes the clutch that selectively connects a vehicle driving shaft to a motor and the engine.

An engine needs to be started for a hybrid vehicle in cases in response to an operation by a driver, for example, an increase in a requested drive force, and cases that does not involve the operation by a driver, for example, a decline in state of charge (hereinafter referred to as SOC) of a battery. When a brake is applied (ON) in a case where the engine needs to be started without involving the operation by the driver or when a brake is applied (ON) in case of starting engine for accelerating the vehicle, a rotation speed of the vehicle driving shaft is reduced to be low. According to the known disclosures, because a rotation speed of an input shaft is reduced to be lower than a rotation speed that is necessary for the engine to independently rotate at steady state (e.g., about 800 rpm), the engine cannot be started even at a timing which requires a start of the engine. In consequence, it becomes difficult to start the engine at an appropriate timing.

A need thus exists for a vehicle drive system that can start an engine at an appropriate timing.

### SUMMARY

In light of the foregoing, a vehicle drive system for controlling a vehicle configured to drive using a motor as a power source without using an engine and configured to drive using the engine and the motor as the power source is provided. The vehicle drive system includes a start request determination portion determining whether a start of the engine is requested when the vehicle drives using the motor as the power source without using the engine, a rotation speed detection portion detecting a rotation speed of an input shaft of a transmission portion provided between the engine and the motor, a start mode determination portion comparing the rotation speed of the input shaft of the transmission portion and a predetermined engine start target rotation speed when the start request determination portion determines that the start of the engine is requested, the start mode determination portion determining whether the rotation speed of the input shaft of the transmission portion is assumed to be lower than the engine start target rotation speed, and an engine start control portion disconnecting the motor and the engine from a driving shaft of the vehicle to start the engine by the motor when the start request determination portion determines that the start of the engine is requested and when the rotation speed of the input shaft of the transmission portion is assumed to be lower than the engine start target rotation speed.

According to the construction of the disclosure, for example, even in a case where the start of the engine is not requested by driver's operation (the driver does not perform an operation intending a request for starting the engine), as necessity arises for starting the engine, the engine can be started at an appropriate timing without missing the timing when the engine needs to be started.

According to another aspect of the disclosure, the engine start control portion starts the engine in a state where the motor and the engine are connected to the driving shaft of the vehicle when the start request determination portion determines that the start of the engine is requested and when the rotation speed of the input shaft of the transmission portion is equal to or greater than the engine start target rotation speed.

According to the construction of the disclosure, the engine can be started at further appropriate timing and a feeling of the driver that a torque that is applied to the driving shaft is unintentionally decreased can be prevented.

According to further aspect of the disclosure, the start mode determination portion determines to start the engine with a first start mode when the rotation speed of the input shaft of the transmission portion is assumed to be lower than the engine start target rotation speed and to start the engine with a second start mode when the rotation speed of the input shaft of the transmission portion is equal to or greater than the engine start target rotation speed. The engine start control portion disconnects the motor and the engine from the driving shaft of the vehicle and starts the engine by the motor as the first start mode when the rotation speed of the input shaft of the transmission portion is assumed to be lower than the engine start target rotation speed, and the engine start control portion starts the engine in a state where the motor and the engine are connected to the driving shaft of the vehicle as the second drive mode when the rotation speed of the input shaft of the transmission portion is equal to or greater than the engine start target rotation speed.

According to the construction of the disclosure, even in a case where the start of the engine is not requested by driver's operation (the driver does not perform an operation intending a request for starting the engine), as necessity arises for starting the engine, the engine can be started at an appropriate timing without missing the timing when the engine needs to be started.

According to still another aspect of the disclosure, the start request determination portion determines whether the start of the engine is requested on the basis of information related to a drive of the vehicle.

According to the construction of the disclosure, when it is necessary to start the engine on the basis of the information related to the drive, or running of the vehicle, the engine can be started at an appropriate timing without missing the timing when the engine needs to be started.

According to further aspect of the disclosure, the start request determination portion receives a state amount of a battery as the information related to the drive of the vehicle, and determines that the start of the engine is requested on the basis of the state amount of the battery.

According to the construction of the disclosure, when the start request determination portion determines, on the basis of the state amount of the battery, that it is necessary to start the engine, the engine can be started at an appropriate timing without missing the timing when the engine needs to be started.

According to still further aspect of the disclosure, the vehicle drive system further includes a clutch provided between the engine and the motor for performing a connection and disconnection of a power transmission. The engine start control portion disconnects the motor and the engine from the driving shaft by means of the clutch when the rotation speed of the input shaft of the transmission portion is assumed to be lower than the engine start target rotation speed, and the engine start control portion engages the clutch at a timing when the rotation speed of the input shaft becomes zero to increase the rotation of the input shaft by the motor.

According to the construction of the disclosure, even in a case where the start of the engine is not requested by driver's operation (the driver does not perform an operation intending a request for starting the engine), as necessity arises for starting the engine, the engine can be started at an appropriate timing without missing the timing when the engine needs to be started.

According to another aspect of the disclosure, the motor and the engine are disconnected from the driving shaft by the clutch when the rotation speed of the input shaft of the transmission portion is assumed to be lower than the engine start target rotation speed in the first start mode, and the clutch is engaged at a timing when the rotation speed of the input shaft becomes zero so that the rotation speed of the input shaft is controlled to increase by the motor.

According to the construction of the disclosure, even in a case where the start of the engine is not requested by driver's operation (the driver does not perform an operation intending a request for starting the engine), as necessity arises for starting the engine, the engine can be started at an appropriate timing without missing the timing when the engine needs to be started.

According to further aspect of the disclosure, the motor provides a motor torque while establishing a slip state of the clutch in the second start mode.

According to the construction of the disclosure, even in a case where the start of the engine is not requested by driver's operation (the driver does not perform an operation intending a request for starting the engine), as necessity arises for starting the engine, the engine can be started at an appropriate timing without missing the timing when the engine needs to be started.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a hybrid vehicle according to an embodiment disclosed here;
Fig. 2 is a block view showing functional structures of an integrated electronic control unit (ECU) according to the embodiment disclosed here;
Fig. 3 is a schematic view of a transmission portion according to the embodiment disclosed here;
Fig. 4 is a flowchart showing a procedure of an engine start control transaction according to the embodiment disclosed here; and
Fig. 5 shows sequential changes in states of an accelerator position and a brake, an engine start request, a rotation speed, a gear shift stage, a start mode, an engine state, a clutch state of a clutch, and a motor torque.

### DETAILED DESCRIPTION

One embodiment of a vehicle drive system will be explained with reference to illustrations of drawing figures as follows. According to the embodiment, the vehicle drive system is mounted to a hybrid vehicle.

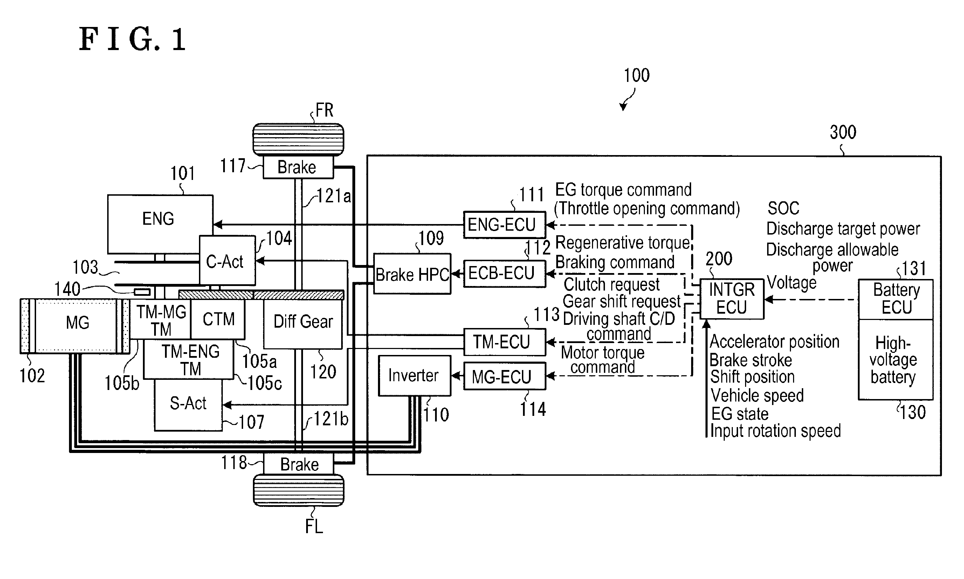

As illustrated in Fig. 1, a hybrid vehicle 100 includes an engine (EGN) 101 outputting a rotation torque by combustion energy of a fuel, and a motor generator (MG) 102 outputting a rotation torque by an electric energy. The engine 101 and the motor generator 102 serve as power sources. The hybrid vehicle 100 is a front wheel drive vehicle. According to the embodiment, the hybrid vehicle 100 includes a drive system and a control device 300.

According to the embodiment, the drive system of the hybrid vehicle 100 includes a right-hand front wheel FR (serving as a driving wheel), a left-hand front wheel FL (serving as a driving wheel), drive shafts 121a, 121b (serving as a driving shaft), a differential gear 120 (serving as a driving shaft), the engine 101, the motor generator 102, a clutch 103, a clutch actuator (also referred to as C-Act) 104, a transmission portion 105 (i.e., including a common transmission portion (also referred to as CTM) 105a, a transmission-motor generator transmission portion 105b (hereinafter referred to as the TM-MG transmission portion 105b; TM-MG TM), and a transmission-engine transmission portion 105c (hereinafter referred to as the TM-ENG transmission portion 105c; TM-ENG TM)), a shift actuator (also referred to as S-Act) 107, and a rotation speed sensor 140 (i.e., serving as a rotation speed detection portion).

An internal combustion engine outputting a torque from an output shaft of the engine, for example, the torque generated by the combustion of a fuel (e.g., hydrocarbon system, for example, gasoline and diesel) is applied as the engine 101. The engine 101 includes various sensors (e.g., engine rotation sensor), and actuators (e.g., actuators for driving an injector and a throttle valve). The engine 101 is communicably connected to an engine ECU (ENG-ECU) 111 and is controlled by the engine ECU 111.

The clutch 103 is positioned between the engine 101 and the transmission portion 105 and the clutch 103 is positioned between the engine 101 and the motor generator 102 to selectively connect the engine 101 and the transmission 105 to transmit a torque (to connect and disconnect the engine 101 and the transmission portion 105 so as to transmit or not to transmit a torque from the engine 101 to the transmission portion 105). The clutch 103 is controlled to be engaged or released (disengaged) by the clutch actuator 104 whose actuation is controlled by a transmission ECU (hereinafter referred to as the TM-ECU) 113.

The motor generator 102 corresponds to a synchronous generator motor that actuates as an electric motor and actuates as an electrical generator. A permanent magnet is embedded in a rotor and a stator coil is wound around a stator in the motor generator 102. The motor generator 102 communicates with a high-voltage battery 130 (serving as a battery) via an inverter 110 for the electric power (the motor generator 102 selectively sends and receives the electric power to and from a high-voltage battery 130 via an inverter 110). More particularly, the motor generator 102 operates as an electric motor receiving a power supply from the high-voltage battery 130 to rotate and output a torque acquired by rotational actuation of the motor generator 102 to the TM-MG transmission portion 105b. A state of the motor generator 102 in the foregoing manner is defined as power running, or excertion.

Further, the motor generator 102 is configured to generate an electromotive force at opposite ends of the stator coil, receiving a torque outputted from the engine 101 to the engine output shaft and a torque from the TM-MG transmission portion 105b, and to operate as an electrical generator to charge the high-voltage battery 130. A state of the motor generator 102 in the foregoing manner is defined as regeneration state.

The transmission portion 105 is connected between the motor generator 102 and the engine 101 and serves as a mechanism for transmitting the torque outputted from the motor generator 102 and the engine 101 to the drive wheels FR, FL via the driving shaft (i.e., differential gear (also referred to as Diff gear) 120 and drive shafts 121a, 121 b). The transmission portion 105 includes the common transmission portion 105a, the TM-MG transmission portion 105b, and the TM-ENG transmission portion 105c. The TM-MG transmission portion 105b is a mechanism for switching a rotation torque outputted from the motor generator 102 to a rotational direction for moving forward or a rotational direction for moving backward to accelerate or decelerate the vehicle. The vehicle is accelerated or decelerated by changing a degree of the rotation torque. The TM-ENG transmission portion 105c is a mechanism for switching a direction of a rotation torque outputted from an engine output shaft of the engine 101 to a rotational direction for moving forward or a rotational direction for moving backward. The vehicle is accelerated or decelerated by changing a degree of the rotation torque. The common transmission portion 105a is a mechanism for transmitting the rotation torque transmitted from the motor generator 102 and the engine 101 to the driving wheels FR, FL (the right-hand front wheel FR, the left-hand front wheel FL) via the driving shaft (i.e., differential gear 120 and drive shafts 121 a, 121b) collectively. Each of the common transmission portion 105a, the TM-MG transmission portion 105b, and the TM-ENG transmission portion 105c is configured to switch to plural gear shift stages (is configured to establish plural gear shift stages). Further, the shift actuator 107 controls the TM-ENG transmission portion 105c, the TM-MG transmission portion 105b, and the common transmission portion 105a to switch gear shift stages thereof.

The differential gear 120 generates a differential motion between the right-hand front wheel FR and the left-hand front wheel FL when transmitting the rotation torque transmitted from the common transmission portion 105a to the driving wheels FR, FL (the right-hand front wheel FR, the left-hand front wheel FL).

The rotation speed sensor 140 is provided in the vicinity of an input shaft of the transmission portion 105 to detect the rotation speed (rotation number) of the input shaft of the transmission portion 105 (hereinafter referred to as the input rotation speed). The rotation speed sensor 140 outputs (sends) the detected input rotation speed to an integrated electronic control unit (integrated ECU) 200.

According to the hybrid vehicle 100 of the embodiment, because a drive system is configured as explained above, the motor generator 102 and the engine 101 include a common output shaft via the transmission portion 105, and are selectively connected to (are connectable to and disconnectable from) the driving shaft (differential gear 120 and the drive shafts 121a, 121b) independently by means of the gears (gear sets) of the transmission portion 105.

Next, the control device 300 of the hybrid vehicle 100 will be explained as follows. The control device 300 controls the entire hybrid vehicle 100. As illustrated in Fig. 1, the control device 300 includes an inverter 110, a brake hydraulic pressure control portion (also referred to as brake HPC) 109, the engine ECU (ENG-ECU) 111, an electronic control brake ECU (ECB-ECU) 112, a transmission ECU (TM-ECU 113), a motor generator ECU (MG-ECU) 114, the integrated ECU (also referred to as INTGR ECU) 200, the high-voltage battery 130, and a battery ECU 131.

The battery ECU 131 controls the high-voltage battery 130 to inform the information related to the high-voltage battery 130, a state amount (e.g., a state of charge (SOC), a discharge allowable power, an electric voltage, the temperature, failure information), to the integrated ECU 200.

The engine ECU (ENG-ECU) 111 is communicably connected to various actuators (e.g., actuators for actuating a throttle valve, and an injector) built-in the engine 101, various sensors (e.g., engine rotation sensor), and the integrated ECU 200. The engine ECU (ENG-ECU) 111 receives an engine torque command (also referred to as EG torque command) (throttle opening command) from the integrated ECU 200 to control the operation of the engine 101.

The electronic control brake ECU (ECB-ECU) 112 is electrically connected to the brake hydraulic pressure control portion 109 and the integrated ECU 200. The electronic control brake ECU 112 receives a braking command and a regenerative torque from the integrated ECU 200 and sends a command to the brake hydraulic pressure control portion 109 on the basis of the braking command and the regenerative torque, thus performing a brake control by an electronically control braking system (ECB) which is a type of a brake-by-wire.

The brake hydraulic pressure control portion 109 performs a brake hydraulic pressure control to brakes 117, 118 upon receiving the command from the ECB-ECU 112, thus automatically actuating the brake relative to the driving wheels in accordance with vehicle states.

The transmission ECU (TM-ECU) 113 is electrically connected to the clutch actuator 104, the shift actuator 107, and the integrated ECU 200. Upon receiving a clutch request from the integrated ECU 200, the transmission ECU 113 controls the clutch actuator 104 to disengage and engage (to selectively engage) the clutch 103. Further, upon receiving a gear shift request (speed change request) from the integrated ECU 200, the transmission ECU 113 controls the shift actuator 107 to switch gear shift stages of the transmission portion 105.

The inverter 110 generates a three-phase alternating current in accordance with a control signal from the motor generator ECU (MG-ECU) 114 and applies the three-phase alternating current to the motor generator 102 to control the operation (drive operation, power generating operation, regenerative operation) of the motor generator 102. The inverter 110 is electrically connected to the high-voltage battery 130 via a boost converter.

The motor generator ECU (MG-ECU) 114 is communicably connected to the inverter 110, various sensors (e.g., rotation sensor), and the integrated ECU 200. Upon receiving the motor torque command from the integrated ECU 200, the motor generator ECU 114 controls the operation of the motor generator 102 via the inverter 110.

The engine ECU 111, the electronic control brake ECU 112, the transmission ECU 113, and the motor generator ECU 114 perform the various control transactions, respectively, by executing predetermined programs (including database, map) that a central processing unit (CPU) reads out from storage medium, or medium, for example, read-only memory (ROM) in accordance with a control signal from the integrated ECU 200.

The integrated ECU 200 controls the operations of the engine ECU 111, the electronic control brake ECU 112, the transmission ECU 113, and the motor generator ECU 114. The integrated ECU 200 is communicably connected to the engine ECU 111, the electronic control brake ECU 112, the transmission ECU 113, the motor generator ECU 114, the various sensors (e.g., rotation sensor), and various switches (e.g., ignition switch). According to the embodiment, the integrated ECU 200 receives the information regarding an accelerator position (accelerator pedal position) from an accelerator pedal position sensor and receives the information regarding the vehicle speed of the hybrid vehicle 100 from a vehicle speed sensor. Further, the integrated ECU 200 receives the information regarding an operation state of the engine 101 from the engine ECU 111. Still further, the integrated ECU 200 receives the information of a brake stroke from a brake stroke sensor, of the shift position from a shift lever, and the state of charge (SOC) from the high-voltage battery 130.

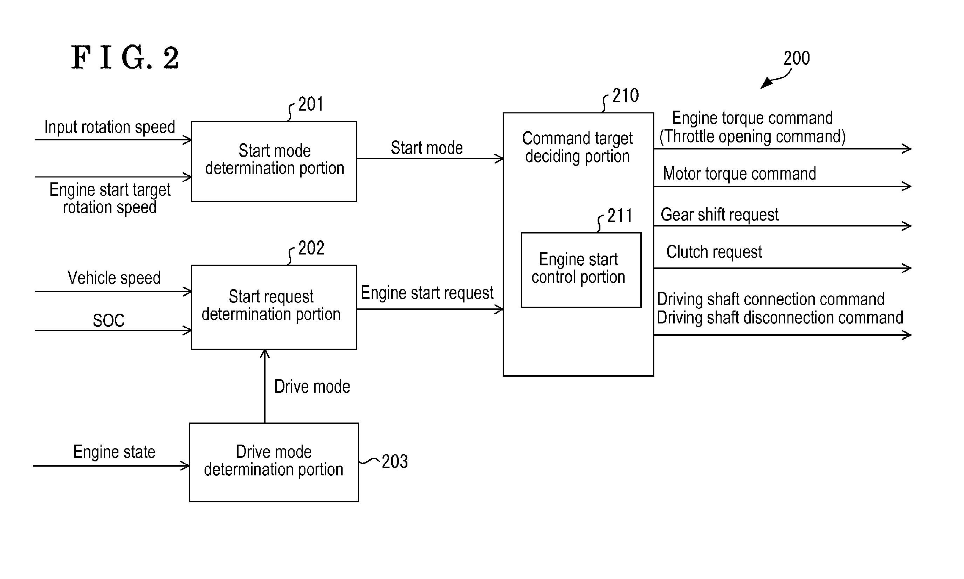

The construction of the integrated ECU 200 will be explained in detail hereinafter. As illustrated in Fig. 2, the integrated ECU 200 of the embodiment includes a start mode determination portion 201, a start request determination portion 202, a drive mode determination portion 203, and a command target deciding portion 210.

By executing the program (including database, map) that the CPU read out from the storage medium, for example, the ROM in accordance with predetermined conditions of the hybrid vehicle 100, the integrated ECU 200 serves as the portions described above and executes functions of each portions explained hereinafter to output various control signals to the engine ECU 111, the electronic control brake ECU 112, the transmission ECU 113, and the motor generator ECU 114.

The drive mode determination portion 203 is inputted with an operation state of the engine 101 from the engine ECU 111, and determines the drive mode of the hybrid vehicle 100 on the basis of the operation state of the engine 101. The drive mode of the embodiment includes a motor drive mode (electric vehicle drive mode; hereinafter, referred to as the EV drive mode) and a hybrid drive mode (hybrid vehicle drive mode; hereinafter, referred to as the HV drive mode). In the EV drive mode, the hybrid vehicle 100 drives only with the motor generator 102 as a power source without using the engine 101 in a released state of the clutch 103. In the HV drive mode, the hybrid vehicle 100 drives with the engine 101 and the motor generator 102 as the power source in a state where the clutch 103 is engaged. The drive mode determination portion 203 transmits signals of the determined drive mode to the start request determination portion 202.

The start request determination portion 202 determines whether there is a request for starting the engine 101 that is not related to (that does not depend on) driver's operation on the basis of the information related to the drive of the hybrid vehicle 100 in a case where it is determined that the hybrid vehicle 100 travels in the motor drive mode. That is, whether it is necessary to start the engine although the driver does not clearly show the request (i.e., without driver's operation) is determined on the basis of the information related to the drive of the hybrid vehicle 100.

More particularly, the start request determination portion 202 receives the state of charge (SOC) of the high-voltage battery 130 as the information related to the drive of the hybrid vehicle 100 from the battery ECU 131, then determines whether the SOC is assumed to be (becomes) equal to or lower than a predetermined threshold value (determines whether the state amount is equal to or lower than a predetermined threshold value; alternatively, determines whether a state amount exceeds a predetermined threshold value). In a case where the SOC is assumed to be (becomes) equal to or lower than the predetermined threshold value (in a case where the state amount is equal to or lower than the predetermined threshold value; alternatively, in a case where the state amount exceeds the predetermined threshold value), the start request determination portion 202 determines that the engine 101 needs to start and the start of the engine 101 is requested. That is, the start request determination portion 202 determines that the engine 101 needs to start (the start of the engine 101 is requested) on the basis of the state amount of the high-voltage battery 130. In those circumstances, an increase in the temperature of the motor generator 102 and the inverter 110, and a decline of the water temperature of the engine 101 may be applied as the information related to the drive, or running of the hybrid vehicle 100 other than the SOC of the high-voltage battery 130.

In a case where the start request determination portion 202 determines that the start of the engine 101 is requested, the start mode determination potion 201 compares an input rotation speed of the input shaft of the transmission portion 105 detected by the rotation sensor 140 and a predetermined engine start target rotation speed to determine whether performing the start of the engine 101 by a first start mode or performing the start of the engine 101 by a second start mode.

A certain rotation speed, for example, an idle rotation speed, is defined as the engine start target rotation speed in the embodiment, however, is not limited to this. Further, in the first start mode, the motor generator 102 and the engine 101 are disconnected (released) from the vehicle driving shaft (drive shafts 121 a, 121 b, differential gear 120), the clutch 103 is engaged, and the engine 101 is started by the motor generator 102. In the second start mode, the engine 101 is started while slipping the clutch 103 by the driver's operation and while transmitting a torque of the motor generator 102 to the driving shaft in a state where the motor generator 102 and the engine 101 are connected to the vehicle driving shaft.

In a case where the start request determination portion 202 determines that the start of the engine 101 is requested, the start mode determination portion 201 compares the input rotation speed obtained from the rotation speed sensor 140 and the predetermined engine start target rotation speed every predetermined time. The start mode determination portion 201 determines to start the engine 101 with the second start mode during the input rotation speed is equal to or greater than the engine start target rotation speed, as a result of the comparison. The start mode determination portion 201 determines to start the engine 101 with the first start mode in a case where the input rotation speed becomes lower than the engine start target rotation speed. The start mode determination portion 201 transmits the information of the determined start mode every time to an engine start control portion 211 of the command target deciding portion 210.

The command target deciding portion 210 obtains an engine torque that the engine 101 targets, a motor toque that the motor generator 102 targets, an engagement capacity that the clutch 103 targets, and a gear shift stage and a regenerative torque that the transmission portion 105 targets, on the basis of the information, for example, the accelerator position, a requested drive force, a discharge target power, and the drive mode, as command target values. The command target deciding portion 210 includes the engine start control portion 211 as illustrated in Fig. 2. Portions of the command target deciding portion 210 associated with the embodiment only are shown in Fig. 2.

The engine start control portion 211 receives a signal of the start mode from the start mode determination portion 201 and controls the engine 101 to start with the start mode that the engine start control portion 211 received. That is, because the engine start control portion 211 receives the signal of the second start mode from the start mode determination portion 201 in a case where the start request determination portion 202 determines that the start of the engine 101 is requested and the input rotation speed does not decline to the engine start target rotation speed and the input rotation speed is equal to or greater than the engine start target rotation speed, the engine start control portion 211 controls the engine 101 to start with the second start mode receiving the signal of the second start mode from the start mode determination portion 201.

More particularly, the engine start control portion 211 outputs a driving shaft connection command (also referred to as driving shaft C-command) to the TM-ECU 113 to connect the motor generator 102 and the engine 101 to the vehicle driving shaft (drive shafts 121a, 121b, differential gear 120). Thus, the engine start control portion 211 starts the engine 101 while making the clutch 103 slip while transmitting the torque of the motor generator 102 to the driving shaft in a state where the motor generator 102 and the engine 101 are connected to the vehicle driving shaft. Accordingly, the generation of the feeling of the driver that the torque that is to be applied to the driving shaft is unintentionally decreased can be prevented.

Further, in a case where the start request determination portion 202 determines that the start of the engine 101 is requested and where the input rotation speed decreases to be lower than the engine start target rotation speed, the engine start control portion 211 receives a signal of the first start mode from the start mode determination portion 201 and controls the engine 101 to start with the first start mode.

More particularly, in the first start mode, the engine start control portion 211 outputs a driving shaft disconnection command (also referred to as driving shaft D-command) to the TM-ECU 113 to disconnect the motor generator 102 and the engine 101 from the vehicle driving shaft. Thus, the engine start control portion 211 disconnects the motor generator 102 and the engine 101 from the vehicle driving shaft to start the engine 101 by the motor generator 102.

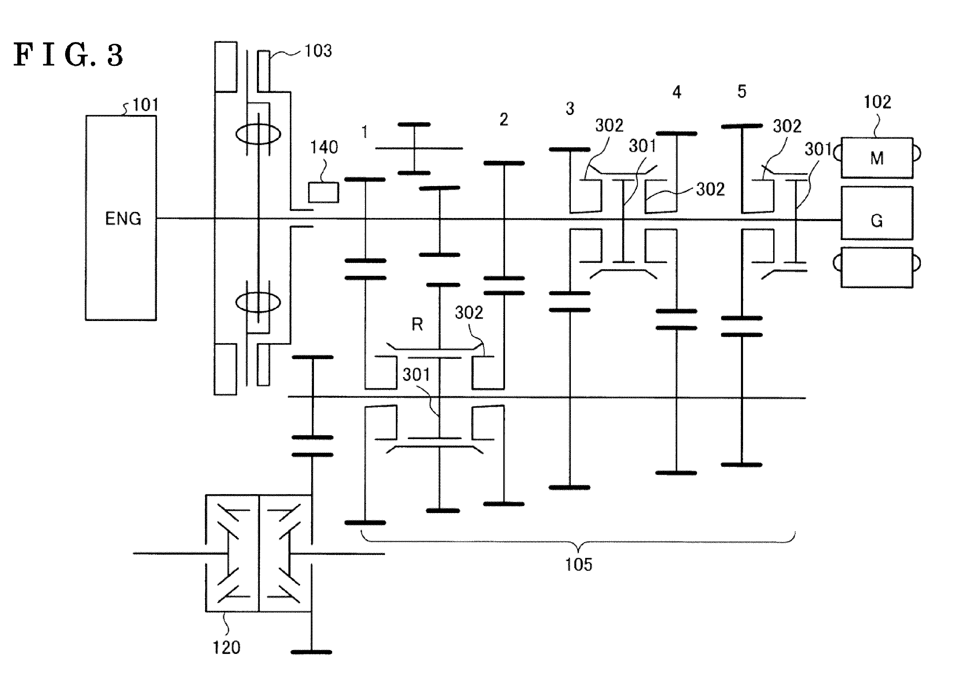

Fig. 3 shows the transmission portion 105, the engine 101, the clutch 103, the motor generator 102, and the differential gear 120 serving as the driving shaft. Fig. 3 shows a state where the driving shaft is disconnected. As illustrated in Fig. 3, the transmission portion 105 of the embodiment connects and disconnects (selectively connects) the driving shaft to and from the engine 101 and the motor generator 102.

That is, as illustrated in Fig. 3, according to the embodiment, the engine 101 and the motor generator 102 are disconnected from the driving shaft by disengaging a sleeve 301 from a gear 302 that is connected to the differential gear 120 thus by positioning the sleeve 301 a neutral position. Here, the gear shift stage that establishes the neutral position corresponds to an engine start gear shift stage.

On the other hand, by connecting one of the sleeves 301 to one of the corresponding gears 302, the engine 101 and the motor generator 102 are connected to the driving shaft. In those circumstances, the gear shift stage where the engine 101 and the motor generator 102 are connected to the driving shaft by the connection of one of the sleeves 301 to the gear 302 is defined as a gear shift stage for drive. The connection and the disconnection of the engine 101 and the motor generator 102 relative to the driving shaft are performed on the basis of commands from the TM-ECU 113.

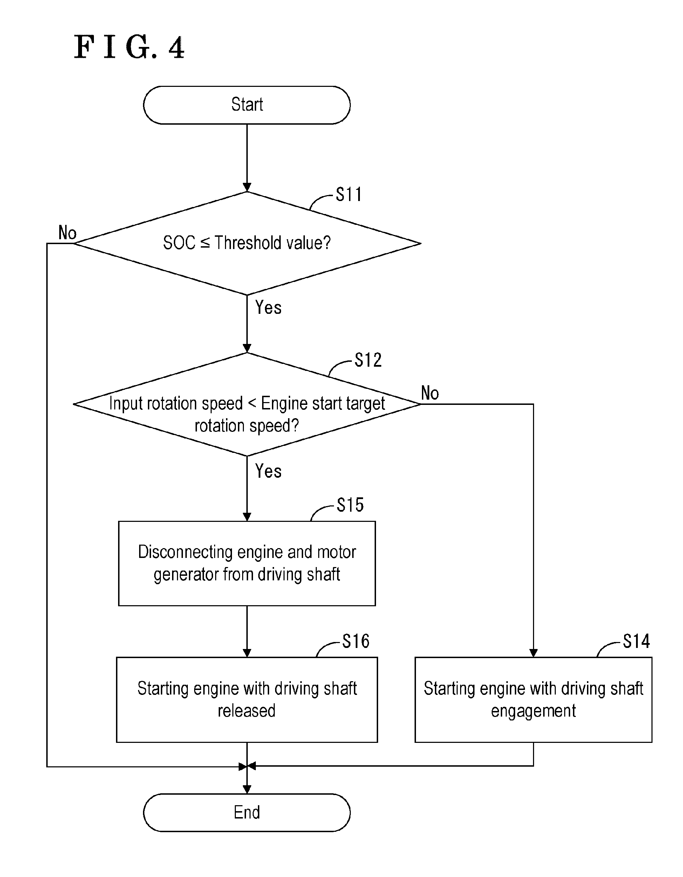

An engine start control transaction by the control device 300 of the hybrid vehicle 100 of the embodiment structured as described above will be explained hereinafter referring to Fig. 4. Here, the hybrid vehicle 100 drives in the EV drive mode and the transaction shown in the flowchart in Fig. 4 is executed when the drive mode determination portion 203 determines that the drive mode is the EV drive mode.

First, the start request determination portion 202 determines whether it is necessary to start the engine by determining whether the state of charge (SOC) is equal to or less than the predetermined threshold value by inputting the SOC of the high-voltage battery 130 from the battery ECU 131 (Step S11). Then, in a case where the SOC is greater than the predetermined threshold value (No, at Step S11), the start request determination portion 202 completes the transaction.

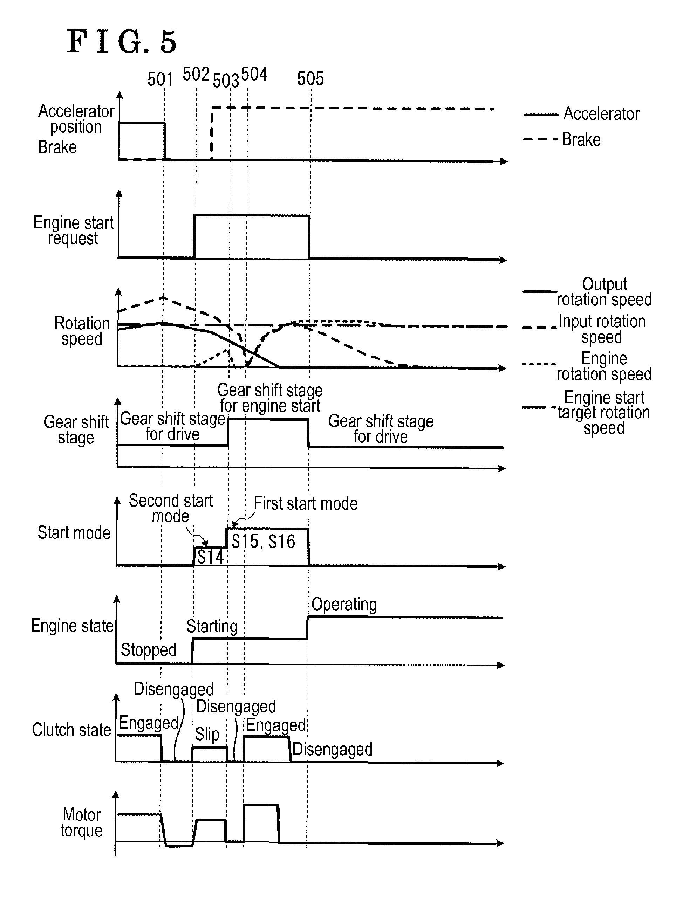

On the other hand, when the SOC is equal to or less than the predetermined threshold value (Yes at Step S11), the start mode determination portion 201 obtains the input rotation speed of the input shaft of the transmission portion 105 from the rotation speed sensor 140, and determines whether the input rotation speed is assumed to be (becomes) less than the predetermined engine start target rotation speed (Step S12). Then, in a case where the input rotation speed is not less than the predetermined engine start target rotation speed, that is, in a case where the input rotation speed is equal to or greater than the predetermined engine start target rotation speed (No at Step S12), the start mode determination portion 201 determines to start the engine 101 with the second start mode and the engine start control portion 211 performs the engine start using the motor generator 102 and the engine 101 connected with the vehicle driving shaft (i.e., the engine start with driving shaft engagement; starting engine with driving shaft engagement), which corresponds to the starting of the engine 101 in the second start mode (Step S14). That is, according to the embodiment, the clutch 103 is provided between the engine 101 and the motor 102 for performing the connection and the disconnection of a power transmission, and the engine start control portion 211 disconnects the motor 102 and the engine 101 from the driving shaft (120, 121a, 121 b) by means of the clutch 103 when the rotation speed of the input shaft of the transmission portion 105 is assumed to be lower than the engine start target rotation speed, and the engine start control portion 211 engages the clutch 103 at a timing when the rotation speed of the input shaft becomes zero to increase the rotation of the input shaft by the motor 102 (see graphs of the rotation speed, the clutch state, and the motor torque in Fig. 5).

That is, the engine start control portion 211 outputs the driving shaft connection command to the TM-ECU 113 to start the engine 101 while transmitting the torque of the motor generator 102 to the driving shaft and while making the clutch 103 slip by driver's operation in a state where the motor generator 102 and the engine 101 are connected to (engaged with) the vehicle driving shaft.

On the other hand, in Step S12, when the input rotation speed becomes lower than the predetermined engine start target rotation speed (Yes at Step S12), the start mode determination portion 201 determines to start the engine 101 with the first start mode and the engine start control portion 211 starts the engine 101 with the first start mode.

That is, the engine start control portion 211 outputs the driving shaft disconnection command to the TM-ECU 113 to disconnect (release) the motor generator 102 and the engine 101 from the vehicle driving shaft (disconnecting the motor generator 102 and the engine 101 from the vehicle driving shaft)(Step S15). Then, the engine start control portion 211 starts the engine in a state where the vehicle driving shaft is released. Namely, the engine start control portion 211 starts the engine 101 by the motor generator 102 in a state where the vehicle driving shaft is released (starting engine with driving shaft released) (Step S16). Thus, according to the construction of the embodiment, the motor 101 and the engine 102 are disconnected from the driving shaft (120, 121a, 121b) by the clutch 103 when the rotation speed of the input shaft of the transmission portion 105 is assumed to be lower than the engine start target rotation speed in the first start mode, and the clutch 103 is engaged at a timing when the rotation speed of the input shaft becomes zero to increase the rotation of the input shaft by the motor 102 (see the graph of the start mode in Fig. 5). Further, the motor (103) provides a motor torque while establishing a slip state of the clutch 103 in the second start mode (see the graph of the clutch state in Fig. 5).

Fig. 5 shows sequential changes in the accelerator position and braking, the engine start request, the rotation speed, the gear shift stage, the start mode, the engine state (also referred to as EG state), the clutch state of the clutch 103, and the motor torque. Provided that the driver stops applying an accelerator pedal at a time indicated with 501 to release the clutch 103, the input rotation speed of the input shaft of the transmission portion 105 gradually decreases.

Then, when the engine start request is performed (when the start of the engine 101 is required) because the SOC of the high-voltage battery 130 declines to be equal to or lower than the predetermined threshold value, the engine start control portion 211 starts the engine 101 with the second start mode during the input rotation speed is equal to or greater than the engine start target rotation speed (period between time 502 and time 503). That is, the engine start control portion 211 starts the engine 101 while making the clutch 103 slip by the operation of the driver while transmitting the torque of the motor generator 102 to the driving shaft in a state where the engine 101 and the motor generator 102 are connected to the driving shaft. In those circumstances, when the driver applies the brake, the input rotation speed further declines.

In a case where the input rotation speed is reduced to be (becomes) lower than the engine start target rotation speed at time 503, the engine start control portion 211 starts the engine 101 with the first start mode. That is, the driver releases the clutch 103 and the engine start control portion 211 disconnects the engine 101 and the motor generator 102 from the driving shaft while changing the gear shift stage of the transmission portion 105 from the gear shift stage for drive to a gear shift stage for engine start. Then, at time 504, the driver engages the clutch 103 and starts the engine 101 by the motor torque of the motor generator 102.

Then, when the engine rotation speed increases and the engine 101 is assumed to be in (becomes) an operation state at time 505, the gear shift stage of the transmission portion 105 is changed to the gear shift stage for drive.

According to the embodiment, in a case where the SOC is assumed to be (becomes) equal to or lower than the predetermined threshold value during the hybrid vehicle 100 travels, or drives in the EV mode, it is determined that the start of the engine 101 is required, and in a case where the input rotation speed of the input shaft of the transmission portion 105 becomes lower than the predetermined engine start target rotation speed, the engine start control portion 211 disconnects the engine 101 and the motor generator 102 from the driving shaft to start the engine 101 by the motor generator 102. Thus, according to the embodiment, even if there is no request for starting the engine by the driver's operation, or as a driver's intension, the engine can be started at an appropriate timing without missing the timing that the engine 101 needs to be started because of the decline of the state of charge (SOC) of the high-voltage battery 130, for example.

According to the embodiment, the information related to the state of the high-voltage battery 130 is applied as the engine start request that does not depend on the operation by the driver, for example, however, the engine start request that does not depend on the operation by the driver is not limited to the example.

Further, according to the embodiment, the engine 101 and the motor generator 102 are selectively connected (connected to and disconnected from) the driving shaft using a dog clutch in the transmission portion 105, however, the construction is not limited. For example, a second clutch for connecting and disconnecting the engine 101 and the motor generator 102 relative to the driving shaft may be provided and the engine 101 and the motor generator 102 may be selectively connected to the driving shaft by the second clutch.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle drive system for controlling a vehicle configured to drive using a motor (102) as a power source without using an engine (101) and configured to drive using the engine (101) and the motor (102) as the power source, the vehicle drive system comprising:
a start request determination portion (202) determining whether a start of the engine (101) is requested when the vehicle drives using the motor (102) as the power source without using the engine (101);
a rotation speed detection portion (140) detecting a rotation speed of an input shaft of a transmission portion (105) provided between the engine (101) and the motor (102);
a start mode determination portion (201) comparing the rotation speed of the input shaft of the transmission portion (105) and a predetermined engine start target rotation speed when the start request determination portion (202) determines that the start of the engine (101) is requested, the start mode determination portion (201) determining whether the rotation speed of the input shaft of the transmission portion (105) is assumed to be lower than the engine start target rotation speed; and
an engine start control portion (211) disconnecting the motor (102) and the engine (101) from a driving shaft (120, 121a, 121b) of the vehicle (100) to start the engine (101) by the motor (102) when the start request determination portion (202) determines that the start of the engine (101) is requested and when the rotation speed of the input shaft of the transmission portion (105) is assumed to be lower than the engine start target rotation speed.

2. The vehicle drive system according to claim 1, wherein the engine start control portion (211) starts the engine (101) in a state where the motor (102) and the engine (101) are connected to the driving shaft (120, 121 a, 121b) of the vehicle (100) when the start request determination portion (202) determines that the start of the engine (101) is requested and when the rotation speed of the input shaft of the transmission portion (105) is equal to or greater than the engine start target rotation speed.

3. The vehicle drive system according to claim 1 or 2, wherein the start mode determination portion (201) determines to start the engine (101) with a first start mode when the rotation speed of the input shaft of the transmission portion (105) is assumed to be lower than the engine start target rotation speed and to start the engine (101) with a second start mode when the rotation speed of the input shaft of the transmission portion (105) is equal to or greater than the engine start target rotation speed;
the engine start control portion (211) disconnects the motor (102) and the engine (101) from the driving shaft (120, 121a, 121b) of the vehicle (100) and starts the engine (101) by the motor (102) as the first start mode when the rotation speed of the input shaft of the transmission portion (105) is assumed to be lower than the engine start target rotation speed, and the engine start control portion (211) starts the engine (101) in a state where the motor (102) and the engine (101) are connected to the driving shaft (120, 121a, 121b) of the vehicle (100) as the second drive mode when the rotation speed of the input shaft of the transmission portion (105) is equal to or greater than the engine start target rotation speed.

4. The vehicle drive system according to any one of claims 1 to 3, wherein the start request determination portion (202) determines whether the start of the engine (101) is requested on the basis of information related to a drive of the vehicle (100).

5. The vehicle drive system according to claim 4, wherein the start request determination portion (202) receives a state amount of a battery (130) as the information related to the drive of the vehicle (100), and determines that the start of the engine (101) is requested on the basis of the state amount of the battery (130).

6. The vehicle drive system according to any one of claims 1 to 5, further comprising:
a clutch (103) provided between the engine (101) and the motor (102) for performing a connection and disconnection of a power transmission;
the engine start control portion (211) disconnects the motor (102) and the engine (101) from the driving shaft (120, 121a, 121b) by means of the clutch (103) when the rotation speed of the input shaft of the transmission portion (105) is assumed to be lower than the engine start target rotation speed, and the engine start control portion (211) engages the clutch (103) at a timing when the rotation speed of the input shaft becomes zero to increase the rotation of the input shaft by the motor (102).

7. The vehicle drive system according to any one of claims 1 to 6, wherein the motor (101) and the engine (102) are disconnected from the driving shaft (120, 121a, 121b) by the clutch (103) when the rotation speed of the input shaft of the transmission portion (105) is assumed to be lower than the engine start target rotation speed in the first start mode, and the clutch (103) is engaged at a timing when the rotation speed of the input shaft becomes zero so that the rotation speed of the input shaft is controlled to increase by the motor (102).

8. The vehicle drive system according to any one of claims 3 to 7 as long as being dependent on claim 3, wherein the motor (103) provides a motor torque while establishing a slip state of the clutch (103) in the second start mode.
